## Europäisches Patentamt
## European Patent Office
## Office européen des brevets

(19)

(11) Veröffentlichungsnummer: **0 126 915**
**B1**

(12) # EUROPÄISCHE PATENTSCHRIFT

(45) Veröffentlichungstag der Patentschrift:
**13.01.88**

(51) Int. Cl.⁴: **G 09 B 29/10**, G 06 K 7/00

(21) Anmeldenummer: **84103885.4**

(22) Anmeldetag: **07.04.84**

(54) **Informationseingabe.**

(30) Priorität: **27.05.83 DE 3319224**

(43) Veröffentlichungstag der Anmeldung:
**05.12.84 Patentblatt 84/49**

(45) Bekanntmachung des Hinweises auf die Patenterteilung:
**13.01.88 Patentblatt 88/2**

(84) Benannte Vertragsstaaten:
**DE FR GB IT**

(56) Entgegenhaltungen:
**DE-A-2 938 483**
**DE-A-3 027 199**
**GB-A-2 077 975**

(73) Patentinhaber: **VDO Adolf Schindling AG,
Gräfstrasse 103, D-6000 Frankfurt/Main (DE)**

(72) Erfinder: **Hirt, Eduard, An den sieben Bäumen 13,
D-6236 Eschborn (DE)**
Erfinder: **Angermüller, Helmut, Dr.,
Raimundstrasse 100, D-6000 Frankfurt/Main (DE)**
Erfinder: **Hahlganss, Günter, Breslauer Strasse 29,
D-6239 Kriftel (DE)**

(74) Vertreter: **Könekamp, Herbert, Dipl.- Ing., Sodener
Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 126 915 B1

LIBER, STOCKHOLM 1988

## Beschreibung

Die Erfindung bezieht sich auf eine Informationseingabe für eine Navigationseinrichtung für Straßenfahrzeuge, wobei einer Landkarte, insbesondere einer eine Straßendarstellung enthaltenden Landkarte Lokalisierungsmarkierungen zum Bestimmen eines Start- bzw. Zielpunktes zuordenbar sind, die optisch lesbare Informationen darstellen und die durch eine Leseeinrichtung erfaßbar und einer Datenverarbeitungseinheit der Navigationseinrichtung zuleitbar sind.

Aus der GB-A-20 77 975 ist eine derartige Informationseingabe bekannt, die entlang des Randes einer Landkarte als Rasterstreifen ausgebildete Lokalisierungsmarkierungen aufweist.

Mittels eines Lichtlesestiftes kann an diesen Lokalisierungsmarkierungen entlanggefahren und so die Information über die Lage bestimmter Punkte auf der Landkarte einer Elektronik zugeführt werden.

Insbesondere, wenn die Daten eines sich etwa in der Mitte der Landkarte befindlichen Punktes erfaßt werden sollen, ist eine genaue Lageerfassung dieses Punktes nur schwer möglich.

Es ist daher Aufgabe der Erfindung, eine Informationseingabe nach dem Oberbegriff zu schaffen, die mit einfachen Mitteln eine einfach handhabbare individuelle Eingabe von Daten, insbesondere Daten des Start- bzw. Zielpunktes ermöglicht.

Diese Aufgabe wird erfindungsgemäß durch die Merkmale des kennzeichnenden Teiles von Anspruch 1 gelöst.

Durch einfaches Anlegen der Schablone an den Start- bzw. Zielpunkt auf einer Landkarte, z. B. eines Autoatlasses und anschließendes optisches Lesen mittels der Leseeinrichtung ist eine einfache Eingabe der Start- und Zielinformationen in die Datenverarbeitungseinheit möglich.

Vorzugsweise stellen die Lokalisierungsmarkierungen Koordinatenwerte dar und können senkrecht und waagerecht verlaufende Rasterstreifen sein.

Um der Datenverarbeitungseinheit anzuzeigen, daß das Einlesen eines Rasterstreifens beendet ist und welches der gerade eingelesene Rasterstreifen ist, kann an einem Ende des Rasterstreifens eine optisch lesbare Endmarkierung und/oder Rasterstreifenkennung angeordnet sein.

Ist eine Mehrzahl von Landkarten vorhanden, so können durch die Leseeinrichtung Landkartenmarkierungen lesbar sein, die die Landkarte identifizierende Informationen enthalten, so daß die eingegebenen Koordinatenwerte auch gleich der richtigen Landkarte zugeordnet werden.

Über diese Eingabedaten hinaus können durch die Leseeinrichtung optisch lesbare Programmierbefehle erfaßbar und für weitere, von der Navigationseinrichtung durchzuführende Schritte der Datenverarbeitungseinheit zuleitbar sein.

Diesen speziellen Programmierbefehlen zuordenbare Zahlenwerte sind damit der Datenverarbeitungseinheit zuleitbar, daß optisch lesbare Zahlencodes den Programmierbefehlen zuordenbar sind.

Vorzugsweise sind die Landkartenmarkierungen der Landkarte und/oder die Programmierbefehle und/oder die Zahlencodes durch Barcodes gebildet.

Das Lesen dieser Informationen ist dadurch einfach, daß die Lokalisierungsmarkierungen und/oder die Landkartenmarkierungen und/oder die Programmierbefehle und/oder die Zahlencodes mittels eines Lichtgriffels optisch lesbar sind. Dies ermöglicht eine sowohl vom Platz als auch Geräteaufwand sowie von der Handhabbarkeit in einem Kraftfahrzeug sinnvoll anwendbare Informationseingabe für Navigationseinrichtungen.

Die leichte Handhabbarkeit wird dadurch noch verstärkt, daß der Lichtgriffel an einer Führungskante entlang der optisch lesbaren Markierungen führbar ist. Eine solche Führungskante ermöglicht selbst bei den in Kraftfahrzeugen vorhandenen engen Platzverhältnissen eine einwandfreie Abtastung mit dem Lichtgriffel.

Um ein Lesen der Markierungen in die verkehrte Richtung zu vermeiden, können die optisch lesbaren Markierungen mit Leserichtungszeichen versehen sein, die in die Richtung zeigen, in welche der Lichtgriffel geführt werden soll.

In einer vorteilhaften Ausbildung kann die Schablone einer Mehrzahl von Landkarten zuordenbar sein.

Über die Lokalisierungsmarkierungen sowie die Marke hinaus kann die Schablone die Landkartenmarkierungen und/oder die Programmierbefehle und/oder die Zahlencodes aufweisen. Dadurch sind alle erforderlichen Einlesedaten auf einem einzigen Bauteil angeordnet.

In einer anderen, ebenfalls vorteilhaften Ausbildung der Informationseingabe kann die Landkarte mit den Landkartenmarkierungen und/oder den Programmierbefehlen und/oder den Zahlencodes versehbar sein. Dies ermöglicht eine besonders einfache Handhabung bei der Einlesbarkeit.

Die optisch lesbaren Markierungen können dabei Aufdrucke auf die Landkarte sein oder aber auch mittels vorgedruckter Aufkleber auf die Landkarten aufgebracht sein.

Ausführungsbeispiele der Erfindung sind in der Zeichnung dargestellt und werden im folgenden näher beschrieben. Es zeigen

Figur 1 eine erfindungsgemäße Schablone,
Figur 2 eine erfindungsgemäße Landkarte zur Schablone nach Figur 1,
Figur 3 ein zweites Ausführungsbeispiel einer erfindungsgemäßen Schablone,

Figur 4 eine Teilansicht der Rückseite der Schablone nach Figur 3 und

Figur 5 eine erfindungsgemäße Landkarte zur Schablone nach Figur 3 und 4.

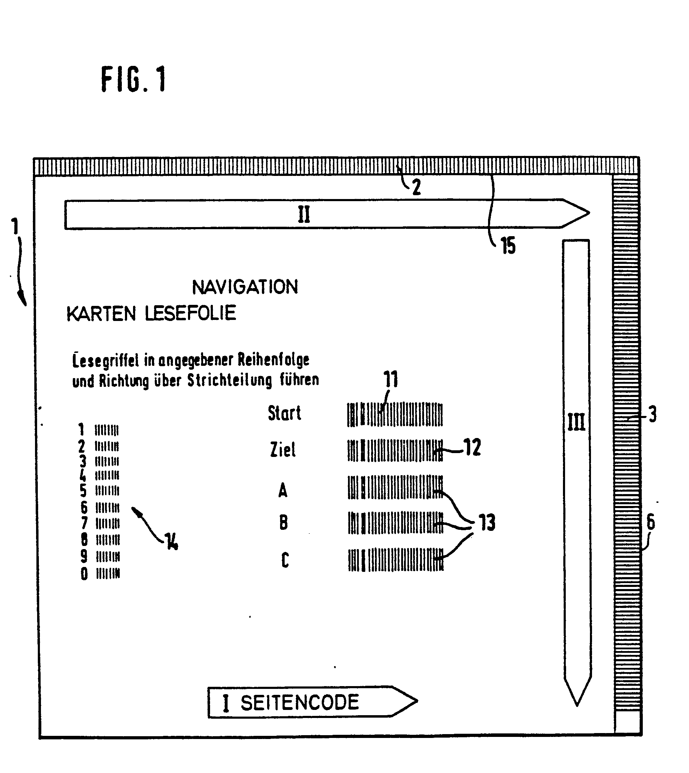

Die in Figur 1 dargestellte Schablone ist eine Folie mit verschiedenen, durch einen nicht dargestellten Lichtgriffel optisch lesbaren Aufdrucken. Entlang der oberen waagrechten Kante ist eine Lokalisierungsmarkierung 2 zur Identifikation der X-Koordinate und entlang der rechten senkrechten Kante ist eine Lokalisierungsmarkierung 3 zur Identifikation der Y-Koordinate angeordnet. Beide Lokalisierungsmarkierungen 2 und 3 sind Rasterstreifen.

Die rechte Seitenkante der Schablone 1 bildet gleichzeitig eine einem Startpunkt 4 bzw. einem Zielpunkt 5 zuordenbare Marke 6.

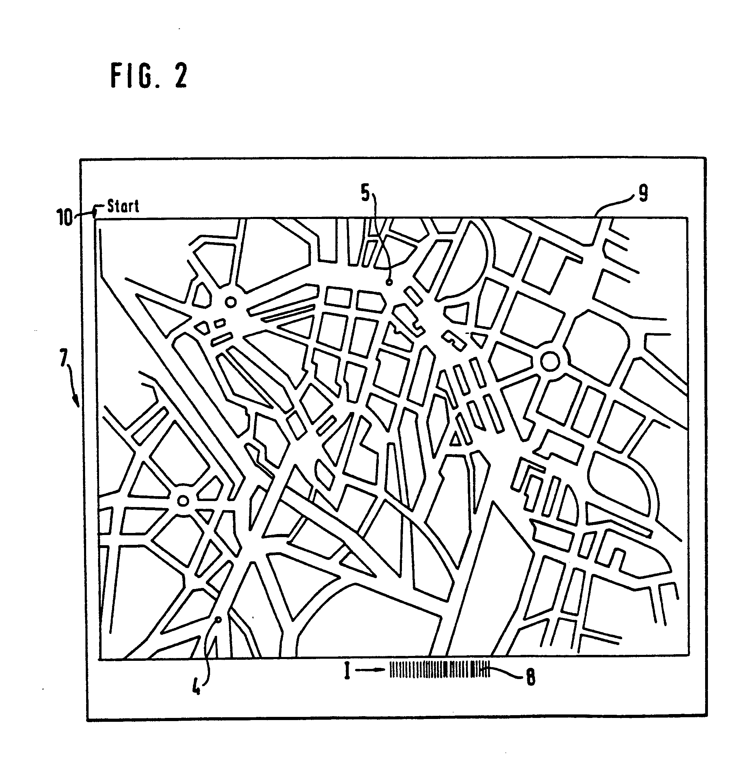

Die Schablone 1 ist einer Vielzahl an Landkarten, z. B. eines Straßenatlasses zuordenbar, von denen eine Landkarte 7 in Figur 2 dargestellt ist. Dabei ist das gesamte Kartenwerk aller im Atlas enthaltenen Landkarten in seiner Kodierung auf einen nicht dargestellten Basispunkt bezogen, der sich auf einer der Landkarten befindet.

Um der Datenverarbeitungseinheit die Grundbezugswerte der Landkarte 7 einlesen zu können, besitzt diese Landkarte 7 eine als Barcode ausgebildete Landkartenmarkierung 8, die die Grundbezugswerte dieser Karte enthält. Um der nicht dargestellten Datenverarbeitungseinrichtung die gewünschte Fahrtroute vom Startpunkt 4 zum Zielpunkt 5 einlesen zu können, wird daher zuerst die Landkartenmarkierung 8 mit dem Lichtgriffel eingelesen.

Nun folgt das Einlesen des Programmierbefehls Start 11.

Anschließend wird die Schablone 1 mit ihrer, durch die rechte senkrechte Kante gebildeten Marke 6 bündig an den Startpunkt 4 und mit der Unterseite 15 der Lokalisierungsmarkierung 2 bündig an die obere Begrenzungslinie 9 der Landkarte 7 angelegt. Mit dem Lichtgriffel wird nun zuerst ausgehend von dem Startpfeil 10 die Lokalisierungsmarkierung 2 bis zu ihrem Ende entlanggefahren.

Dadurch wird die X-Koordinate des Startpunkts 4 eingelesen.

Danach wird ausgehend vom Startpunkt 4 die Lokalisierungsmarkierung 3 senkrecht nach unten bis zu ihrem Ende mit dem Lichtgriffel entlanggefahren, wodurch die Y-Koordinate des Startpunkts 4 eingelesen wird.

Nachdem jetzt der Barcode des Programmierbefehls Ziel 12 eingelesen wurde, folgt das optische Erfassen des Zielpunktes 5 nach dem gleichen Prinzip, wie das Erfassen des Startpunktes 4.

Es versteht sich, daß die Programmierbefehle Start und Ziel auch durch Betätigung entsprechender Schalter erfolgen könnte. Die Eingabe mittels Barcode und Lichtgriffel macht solche Schalter aber überflüssig.

Um weitere, fest vorgegebene Programmierbefehle der Datenverarbeitungseinheit eingeben zu können, sind zusätzliche Barcodes 13 auf der Schablone 1 angeordnet. Diese können in ihrer Aussage noch modifiziert werden, indem man sie mit den einlesbaren Zahlencodes 14 kombiniert einliest.

Es ist aber auch möglich, die Zahlencodes 14 unabhängig von den Barcodes 13 zu verwenden. Dabei könnten den einzelnen Ziffern bzw. Ziffernkombinationen bestimmte Funktionen zugeordnet sein.

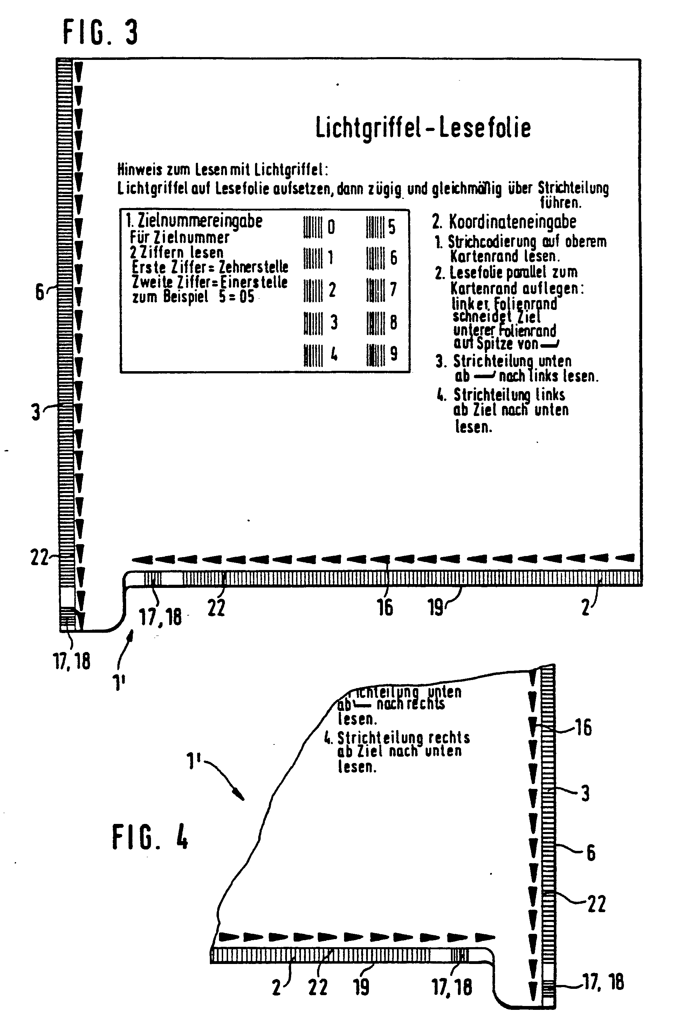

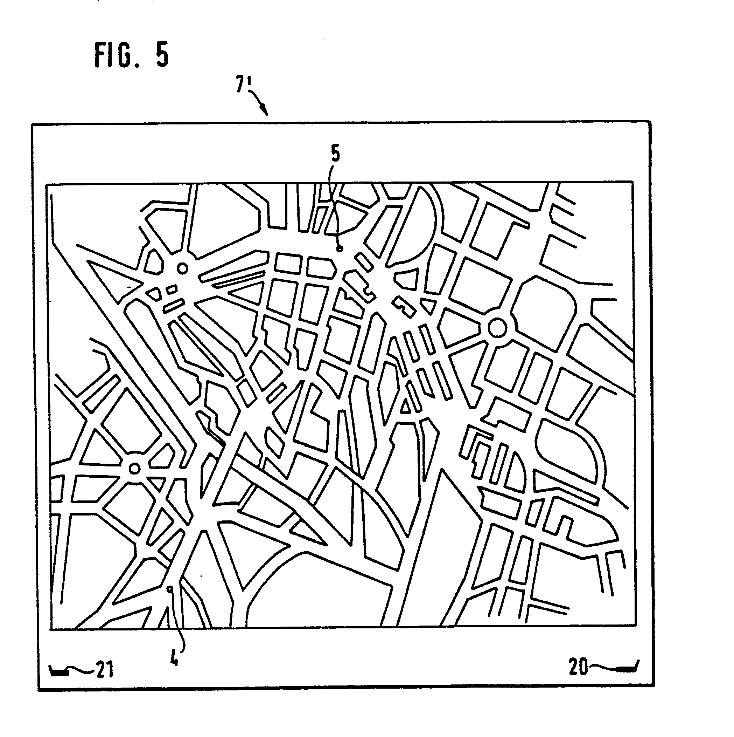

In den Figuren 3 und 4 sind die beiden Seiten einer weiteren Schablone 1' dargestellt, die zur Verwendung bei der Landkarte 7' wie in Figur 5 vorgesehen ist. Dabei ist auf der in Figur 3 dargestellten Seite die X-Koordinate von rechts nach links und in Figur 4 von links nach rechts einzulesen. Die Leserichtung ist dabei durch Leserichtungszeichen 16 gekennzeichnet.

Durch die beiden Möglichkeiten der Leserichtung der X-Koordinate können auch Start- bzw. Zielpunkte leicht eingelesen werden, die sich im rechten bzw. linken Randbereich der Landkarte 7' befinden, da die Schablone 1' auch dann großflächig auf der Landkarte 7' aufgelegt werden kann.

Am in Leserichtung jeweiligen Ende der Lokalisierungsmarkierungen 2 und 3 sind ebenfalls als Barcodes ausgebildete Endmarkierungen 17 und Rasterstreifenkennungen 18 angeordnet. Beim Überfahren dieser Endmarkierungen 17 und Rasterstreifenkennungen 18 mit dem Lichtgriffel wird für die jeweilige Lokalisierungsmarkierung 2 bzw. 3 eingelesen, daß der Einlesevorgang dieser Lokalisierungsmarkierung 2 bzw. 3 beendet ist und um welche Lokalisierungsmarkierung 2 oder 3 es sich handelte.

Zum Einlesen der Koordinatenwerte des Startpunktes 4 wird die Schablone 1' mit der in Figur 3 dargestellten Seite nach oben derart parallel zum Rand der Landkarte 7' auf diese aufgelegt, daß ihr linker Rand den Startpunkt 4 schneidet. Dieser linke Rand bildet die Marke 6. Weiterhin muß der untere Schablonenrand 19 auf der Spitze des rechten Pfeils 20 aufliegen.

Nun wird der Lichtgriffel ausgehend von dem Pfeil 20 über die Lokalisierungsmarkierung 2 sowie die anschließende Endmarkierung 17 und Rasterstreifenkennung 18 geführt. Damit ist die X-Koordinate eingelesen.

Anschließend wird der Lichtgriffel ausgehend von dem Start-Punkt 4 über die Lokalisierungsmarkierung 3 sowie die anschließende Endmarkierung 17 und Rasterstreifenkennung 18 nach unten geführt. Damit ist die Y-Koordinate eingelesen.

Damit der Lichtgriffel sicher auf den Lokalisierungsmarkierungen 2 und 3 entlanggeführt werden kann, besitzt die Schablone 1' am Rand der Lokalisierungsmarkierungen Führungskanten 22.

Befindet sich ein einzulesender Start- bzw. Zielpunkt nahe dem rechten Kartenrand, so wird zum Koordinateneinlesen die in Figur 4 dargestellte Seite der Schablone 1' benutzt. Der Einlesevorgang ist im Prinzip der gleiche, wie der vorbeschriebene. Nur wird nun zum Einlesen der X-Koordinate der Lichtgriffel auf der Lokalisierungsmarkierung 2 ausgehend vom Pfeil 21 nach rechts geführt.

## Patentansprüche

1. Informationseingabe für eine Navigationseinrichtung für Straßenfahrzeuge, wobei einer Landkarte (7), insbesondere einer eine Straßendarstellung enthaltenden Landkarte Lokalisierungsnarkierungen (2, 3) zum Bestimmen eines Start- bzw. Zielpunktes (4 bzw. 5) zuordenbar sind, die optisch lesbare Informationen darstellen und die durch eine Leseeinrichtung erfaßbar und einer Datenverarbeitungseinheit der Navigationseinrichtung zuleitbar sind, dadurch gekennzeichnet, daß einer auf der Landkarte (7) verschiebbare Schablone (1,1') vorgesehen ist, die eine Marke (6), die einen Start- bzw. Zielpunkt (4 bzw. 5) auf der Landkarte (7, 7') zuordenbar ist und die optisch lesbare Lokalisierungsmarkierungen (2, 3), die im zugeordneten Zustand der Marke (6) zum Startbwz. Zielpunkt (4 bzw. 5) durch die Leseeinrichtung erfaßbar sind, aufweist, wobei eine die Marke (6) bildende Bezugslinie durch eine senkrecht und/oder waagerecht verlaufende Kante der Schablone (1, 1') gebildet ist, die an eine entsprechende Bezugslinie der Landkarte (7, 7') anlegbar ist.

2. Informationseingabe nach Anspruch 1, dadurch gekennzeichnet, daß die Lokalisierungsmarkierungen (2, 3) Koordinatenwerte darstellen.

3. Informationseingabe nach Anspruch 2, dadurch gekennzeichnet, daß die Lokalisierungsmarkierungen (2, 3) senkrecht und waagerecht verlaufenden Rasterstreifen sind.

4. Informationseingabe nach Anspruch 3, dadurch gekennzeichnet, daß an einen Ende des Rasterstreifens eine optisch lesbare Endmarkierung (17) und/oder Rasterstreifenkennung (18) angeordnet ist.

5. Informationseingabe nach einem der vorhergehenden Ansprüche, dadurch gekennzeichnet, daß durch die Leseeinrichtung Landkartenmarkierungen (8) lesbar sind, die die Landkarte (7) identifizierende Informationen enthalten.

6. Informationseingabe nach einem der vorhergehenden Ansprüche, dadurch gekennzeichnet, daß durch die Leseeinrichtung optisch lesbare Programmierbefehle erfaßbar und der Datenverarbeitungseinheit zuleitbar sind.

7. Informationseingabe nach Anspruch 6, dadurch gekennzeichnet, daß optisch lesbare Zahlencodes (14) den Programmierbefehlen zuordenbar sind.

8. Informationseingabe nach einem der vorhergehenden Ansprüche, da- durch gekennzeichnet, dan die Landkartenmarkierungen (8) und/oder die Zahlencodes (14) durch Barcodes gebildet sind.

9. Informationseingabe nach einem der vorhergehenden Ansprüche, da- durch gekennzeichnet, daß die Lokalisierungsmarkierungen (2,3) und/oder die Landkartenmarkierungen (8) und/oder die Programmierbefehle (10 bis 13) und/oder die Zahlencodes (14) mittels eines Lichtgriffels optisch lesbar sind.

10. Informationseingabé nach Anspruch 9, dadurch gekennzeichnet, daß der Lichtgriffel an einer Führungskante (22) entlang der optisch lesbaren Markierungen führbar ist.

11. Informationseingabe nach einem der vorhergehenden Ansprüche, dadurch gekennzeichnet, daß die optisch lesbaren Markierungen mit Leserichtungszeichen (16) versehen sind.

12. Informationseingabe nach einem der vorhergehenden Ansprüche, da- durch gekennzeichnet, dan die Schablone (1, 1') einer Mehrzahl von Landkarten (7, 7') zuordenbar ist.

13. Informationseingabe nach einem der vorhergehenden Ansprüche, dadurch gekennzeichnet, daß die Schablone (1, 1') die Landkartenmarkierungen (8) und/oder die Programmierbefehle und/oder die Zahlencodes (14) aufweist.

14. Informationseingabe nach einem der vorhergehenden Ansprüche, dadurch gekennzeichnet, daß die Landkarte mit den Landkartenmarkierungen und/oder den Programmierbefehlen und/oder den Zahlencodes versehbar ist.

15. Informationseingabe nach Anspruch 14, dadurch gekennzeichnet, daß die optisch lesbaren Markierungen Aufdrucke auf die Landkarte sind.

16. Informationseingabe nach Anspruch 14, dadurch gekennzeichnet, dan die optisch lesbaren Markierungen mittels Aufkleber auf die Landkarte aufgebracht sind.

## Claims

1. Data input system for a navigation device for road vehicles, there being associated with a map (7), especially a map containing a representation of streets or roads, localisation markings (2, 3) for determining a starting point or destination point (4, 5) which represent optically readable data and which can be detected by a reading device and fed to a data processing unit of the navigation device, characterised in that an overlay (1, 1') is provided which is displaceable on the map (7) and which has a mark (6) associatable with a starting point or destination point (4, 5 respectively) on the map (7, 7'), and the optically readable localisation markings (2, 3) which are detectable by the reading device in the associated state of the mark (6) with the starting point or destination point (4, 5 respectively), a reference line constituting the mark (6) being formed by a vertically or horizontally disposed edge of the overlay (1, 1') which is adapted to be placed on a corresponding reference line of the map (7, 7').

2. Data input system according to claim 1, characterised in that the localisation markings (2, 3) represent coordinate values.

3. Data input system according to claim 2, characterised in that the localisation markings (2, 3) are vertically and horizontally disposed grid strips.

4. Data input system according to claim 3, characterised in that an optically readable end marking (17) and/or grid strip identification (18) is arranged at one end of the grid strip.

5. Data input system according to one of the preceding claims, characterised in that the reading device can read map markings (8) which contain data identifying the map (7).

6. Data input system according to one of the preceding claims characterised in that the reading device can detect optically readable programming instructions, which can be fed to the data processing unit.

7. Data input system according to claim 6, characterised in that optically readable number codes (14) are associatable with the programming instructions.

8. Data input system according to one of the preceding claims, characterised in that the map markings (8) and/or the number codes (14) are formed of bar codes.

9. Data input system according to one of the preceding claims, characterised in that the localisation markings (2, 3) and/or the map markings (8) and/or the programming instructions (10 to 13) and/or the number codes (14) are optically readable by means of a light pen.

10. Data input system according to claim 9, characterised in that the light pen is adapted to be guided on a guide edge (22) along the optically readable markings.

11. Data input system according to one of the preceding claims, characterised in that the optically readable markings are provided with reading-direction signs (16).

12. Data input system according to one of the preceding claims, characterised in that the overlay (1, 1') is associatable with a plurality of maps (7, 7').

13. Data input system according to one of the preceding claims, characterised in that the overlay (1, 1') comprises the map markings (8) and/or the programming instructions and/or the number codes (14).

14. Data input system according to one of the preceding claims, characterised in that the map is providable with the map markings and/or the programming instructions and/or the number codes.

15. Data input system according to claim 14, characterised in that the optically readable markings are printed on the map.

16. Data input system according to claim 14, characterised in that the optically readable markings are applied by means of stickers to the map.

**Revendications**

1. Dispositif de saisie de données destinées à un dispositif de navigation pour véhicules routiers ou urbains, dans lequel on peut faire correspondre à une carte géographique (7), en particulier à une carte sur laquelle sont représentées des voies, routes, ou rues, des marquages (2, 3) de localisation pour la détermination d'un point de départ ou d'un point de destination (4 ou 5), marquages qui représentent des informations lisibles par voie optique et pouvant être saisies grâce à un dispositif de lecture et être délivrées à une unité de traitement de données du dispositif de navigation, dispositif de saisie caractérisé en ce qu'on prévoit un gabarit (1, 1') susceptible d'être déplacé sur la carte géographique (7) qui présente une marque (6) pouvant être associée à un point de départ ou à un point de destination (4 ou 5) situé sur la carte géographique (7, 7') et les marquages (2, 3) de localisation lisibles optiquement qui, la marque (6) étant calée, peuvent être saisis pour le point de départ ou le point de destination (4 ou 5), une ligne de référence formant la marque (6) étant constituée par un bord s'étendant verticalement ou horizontalement, du gabarit (1, 1') et pouvant être posé contre une ligne de référence correspondante de la carte géographique (7, 7').

2. Dispositif de saisie d'information selon la revendication 1, caractérisé en ce que les marquages (2, 3) de localisation représentent des valeurs de coordonnées.

3. Dispositif de saisie d'information selon la revendication 1, caractérisé en ce que les marquages (2, 3) de localisation sont des échelles de trame, qui s'étendent verticalement et horizontalement.

4. Dispositif de saisie d'information selon la revendication 2, caractérisé en ce qu'à une extrémité de l'échelle de trame sont disposés un marquage (17) d'extrémité et/ou une caractéristique (18) d'échelle de trame, optiquement lisibles.

5. Dispositif de saisie d'information selon une des revendications précédentes, caractérisé en ce que le dispositif de lecture permet de lire des marquages (8) placés sur la carte géographique et contenant des informations permettant d'identifier la carte géographique (7).

6. Dispositif de saisie d'information selon une des revendications précédentes, caractérisé en ce que des commandes de programmation, lisibles optiquement par le dispositif de lecture, peuvent être saisies et délivrées à l'unité de traitement de données.

7. Dispositif de saisie d'information selon la revendication 6, caractérisé en ce que l'on peut affecter des codes numériques (14), lisibles optiquement, aux commandes de programmation.

8. Dispositif de saisie d'information selon une des revendications précédentes, caractérisé en ce que les marquages (8) de cartes géographiques et/ou les codes numériques (14) sont des codes à barres.

9. Dispositif de saisie d'informations selon une des revendications précédentes, caractérisé en ce que les marquages (2, 3) de localisation et/ou les marquages (8) de cartes géographiques et/ou les commandes (10 à 13) de programmation et/ou les codes numériques (14) sont lisibles optiquement au moyen d'un crayon optique.

10. Dispositif de saisie d'informations selon la revendication 9, caractérisé en ce que le crayon optique peut être guidé contre un bord (22) de guidage le long des marquages lisibles optiquement.

11. Dispositif de saisie d'information selon une des revendications précédentes, caractérisé en ce que les marquages lisibles optiquement comportent une signalisation (16) de sens de lecture.

12. Dispositif de saisie d'information selon une des revendications précédentes, caractérisé en ce qu'on peut associer ou faire correspondre les gabarits (1, 1') à plusieurs cartes géographiques (7, 7').

13. Dispositif de saisie d'information selon une des revendications précédentes, caractérisé en ce que le gabarit (1, 1') présente les marquages (8) pour carte géographique et/ou les commandes de programmation et/ou les codes numériques (14).

14. Dispositif de saisie d'information selon une des revendications précédentes, caractérisé en ce que la carte géographique peut être munie de marquages pour cartes géographiques et/ou de commandes de programmation et/ou de codes numériques.

15. Dispositif de saisie d'information selon la revendication 14, caractérisé en ce que les marquages lisibles optiquement sont des impressions réalisées sur la carte géographique.

16. Dispositif de saisie d'information selon la revendication 14, caractérisé en ce que les marquages lisibles optiquement sont placés au moyen d'adhésifs sur la carte géographique.

# FIG. 1

**NAVIGATION**

KARTEN LESEFOLIE

Lesegriffel in angegebener Reihenfolge
und Richtung über Strichteilung führen

Start

Ziel

A

B

C

I SEITENCODE

II

III

# FIG. 2

## FIG. 3

### Lichtgriffel - Lesefolie

Hinweis zum Lesen mit Lichtgriffel:
Lichtgriffel auf Lesefolie aufsetzen, dann zügig und gleichmäßig über Strichteilung führen.

1. Zielnummereingabe
Für Zielnummer
2 Ziffern lesen
Erste Ziffer = Zehnerstelle
Zweite Ziffer = Einerstelle
zum Beispiel 5 = 05

‖‖‖ 0    ‖‖‖ 5
‖‖‖ 1    ‖‖‖ 6
‖‖‖ 2    ‖‖‖ 7
‖‖‖ 3    ‖‖‖ 8
‖‖‖ 4    ‖‖‖ 9

2. Koordinateneingabe

1. Strichcodierung auf oberem Kartenrand lesen.
2. Lesefolie parallel zum Kartenrand auflegen: linker Folienrand schneidet Ziel unterer Folienrand auf Spitze von ⌐
3. Strichteilung unten ab ⌐ nach links lesen.
4. Strichteilung links ab Ziel nach unten lesen.

17, 18    17, 18    22    16    19    2
1'

## FIG. 4

1'

...ichteilung unten ab ⌐ nach rechts lesen.
4. Strichteilung rechts ab Ziel nach unten lesen.

16
3
6
22
17, 18

2    22    19    17, 18

## FIG. 5